**Europäisches Patentamt**

**European Patent Office**

**Office européen des brevets**

(11) Veröffentlichungsnummer: **0 298 250 B1**

(12) **EUROPÄISCHE PATENTSCHRIFT**

(45) Veröffentlichungstag der Patentschrift: **06.05.92**

(51) Int. Cl.⁵: **G06K 9/46**

(21) Anmeldenummer: **88108722.5**

(22) Anmeldetag: **31.05.88**

(54) **Flexible Erkennung von Objektstrukturen in Farb- und Grauwertbildern.**

(30) Priorität: **10.07.87 DE 3722922**

(43) Veröffentlichungstag der Anmeldung:
**11.01.89 Patentblatt 89/02**

(45) Bekanntmachung des Hinweises auf die
Patenterteilung:
**06.05.92 Patentblatt 92/19**

(84) Benannte Vertragsstaaten:
**CH DE FR GB LI NL**

(56) Entgegenhaltungen:
**WO-A-86/03866**
**DE-A- 3 315 109**
**DE-A- 3 622 382**
**US-A- 4 497 066**

**PROCEEDINGS OF THE EIGHTH INTERNATIO-
NAL CONFERENCE ON PATTERN RECOGNI-
TION, 27.-31. Oktober 1986, Paris, FR, Seiten
424-426, IEEE, New York, US; M. NAGAO et
al.: "Shape recognition system by variable
size slit method - its hardware and software"**

(73) Patentinhaber: **SIEMENS AKTIENGESELL-
SCHAFT**
**Wittelsbacherplatz 2**
**W-8000 München 2(DE)**

(72) Erfinder: **Esterhammer, Stefan, Ing. grad.**
**Funkenseestrasse 9**
**W-8000 München 82(DE)**
Erfinder: **Kilgenstein, Siegfried, Dipl.-Ing.**
**Ramannstrasse 5**
**W-8000 München 50(DE)**
Erfinder: **Mengel, Peter, Dr.rer.nat.**
**Roggensteiner Allee 32**
**W-8031 Eichenau(DE)**

**Beschreibung**

Die Erfindung betrifft eine Einrichtung zur flexiblen Erkennung von Objektstrukturen mit einem optoelektronischen Bildwandler für die zeilen förmige Bildabtastung, wobei jeweils der momentane Helligkeitswert der Bildabtastung mit einem bestimmten, in einem Speicher abgelegten, vorausgegangenen Verknüpfungsergebnis logisch verarbeitet wird und die reduzierten Bilddaten zur Auffindung der gesuchten Strukturen in einem Bildprozessor ausgewertet werden, entsprechend dem ersten Teil des Anspruch 1.

Die Automatisierung visueller Meß- und Prüfvorgänge in der industriellen Produktion erfordert Sensorsysteme mit hoher Flexibilität und kurzen Verarbeitungszeiten. Die Bildverarbeitung muß bei unterschiedlichen Erkennungsaufgaben mit der Geschwindigkeit moderner Produktionsstraßen schritthalten. Dabei sind Taktzeiten von einigen 1/10 Sekunden vorgesehen.

Als kommerziell verfügbare Systeme stehen heute Bildverarbeitungsanlagen zur Verfügung, die mittels Rechnerprogramm die Bearbeitung eines abgespeicherten Fernsehbildes im Graubild (8 bit) ermöglichen.

Die bei der Bildauswertung anfallenden immensen Datenmengen (ca. 10 MByte/sec) können allerdings von keinem Rechnersystem On line variativ verarbeitet und ausgewertet werden. Dies gilt auch beim Einsatz spezieller Hardwareprozessoren (Bit-Slice Systeme, Arrayprozessoren). Die Anwendung derartiger Systeme in der industriellen Fertigung ist zudem aufgrund der hohen Anschaffungskosten und der aufwendigen Programmentwicklung nur selten wirtschaftlich.

Es ist daher erforderlich durch eine gezielte Hardwareverarbeitung eine Datenreduktion der anfallenden Bildinformation nach aufgabenspezifischen Objektmerkmalen durchzuführen.

Ein elektronisch abgetastetes Farbbild mit einer Ortsauflösung von 512 x 512 Punkten und 3 x 8 Bit für die R-, G- und B-Kanäle liefert bei einer Abtastrate von 25 Bildern/s einen Datenstrom von 157 Millionen Bit/s (Markt und Technik Hr. 6, 07.02.1986, Seite 82 bis 104).

In der europäischen Patentanmeldung 0 196 514 ist eine Einrichtung zur Detektion von Kanten beschrieben, die orthogonale Kantenstrukturen eines Bildes durch Summation der digitalisierten Videosignale eines CCD-Bildwandlers in einem Zeilen- und Spaltenintegrator erkennt.

Eine dem ersten Teil von Anspruch 1 entsprechende Einrichtung ist aus der WO-A-86/03866 bekannt.

Diese Patentanmeldung beschreibt eine Anordnung zur Bildverarbeitung zur Erkennung der Position und der Orientierung eines Objektes. Hierin wird ein aufgenommenes und abgespeichertes Bild vollständig durch das Setzen von Fenstern unterteilt. Durch einen fensterspezifischen Operator werden einkommende Pikeldaten mit in einem Ergebnisspeicher vorhandenen reduzierten Bilddaten verrechnet und im Ergebnisspeicher wieder abgelegt. Es wird jeweils mit einem Referenzobjekt verglichen.

Die deutsche Offenlegungsschrift DE-A-33 15 109 beschreibt einen Musterdiskriminator, der mittels eines Fenstergenerators eine umfassende Fenstereinstellung ermöglicht, wobei die Definition der Fenster durch Annäherung über einen Polygonzug geschieht.

Der Erfindung liegt die Aufgabe zugrunde, die eingangs beschriebene Einrichtung zu konzipieren, um allgemeine Objektstrukturen in einem Videobild bei beliebiger Orientierung zu erkennen.

Diese Aufgabe wird gemäß dem Kennzeichen des Anspruchs 1 gelöst. Vorteilhafte Ausführungsformen und Weiterbildungen der Erfindung sind in den Unteransprüchen enthalten.

Eine erfindungsgemäße elektronische Einrichtung ist dabei im wesentlichen durch folgende Merkmale charakterisiert:

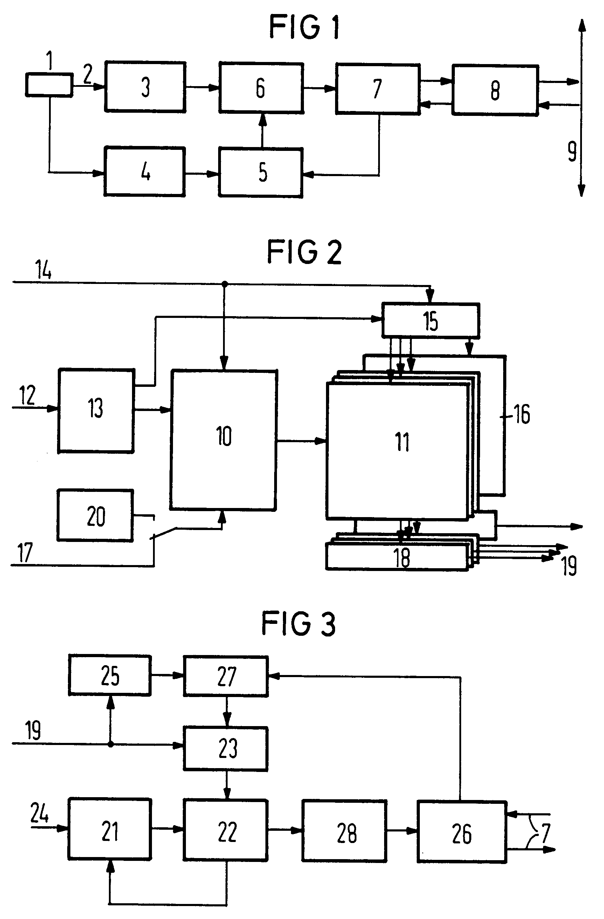

- Flexible, digitale Verarbeitung der sequentiell anfallenden Videosignale (Farb- oder Grauwertpixel) eines Bildwandlers (bevorzugt CCD Halbleiterkamera) entsprechend dem in Figur 1 dargestellten Blockschema.

- Steuerung der logischen Verknüpfungen beliebiger Bildpunkte durch den Informationsinhalt eines parallel zum Videosignal ausgelesenen RAM Speicher (Steuerspeicher).

- Aufgabenspezifische schnelle Programmierung des Steuerspeichers innerhalb der Austastlücke des Videosignals durch einen universellen Grafikprozessor.

- Verknüpfung der individuellen Bildpunkte in einer digitalen Verarbeitungsstufe (zum Beispiel Alu, mögliche Bildoperationen: Summation, Differenzbildung, Bool'sche Algebra) und Ablage des Ergebnisses der gewählten Bildoperation in einem RAM-Speicher entlang des Verarbeitungsweges. Dabei wird eine Datenreduktion von typ. 256 kByte je Fernsehvollbild auf 2048 Byte aufgabenrelevante Bildmerkmale erzielt.

- Anwendungsspezifische Weiterverarbeitung der reduzierten Bilddaten in einem geeigneten Mikroprozessorensystem (zum Beispiel Prozessor 80188).

- Darstellung des vorgegebenen Verarbeitungsverlaufes am TV-Monitor zur einfachen, flexiblen Programmierung der Steuereinheit.

Der wesentliche Vorteil der Erfindung besteht darin, daß zur schnellen Verarbeitung von Farb- und Grauwertbildern eine gespeicherte Steuerinformation vorhanden ist, die in einer digitalen Auswerteeinheit die aufgabenspezifische Verknüpfung beliebiger Bildpunkte ermöglicht und den so reduzierten Bildinhalt in einem Ergebnisspeicher zur weiteren Bildanalyse zur Verfügung stellt.

Die Erfindung wird anhand der Figuren erläutert. Es zeigen:

Figur 1 in stark vereinfachter schematischer Darstellung ein Blockschaltbild einer Einrichtung zur flexiblen digitalen Grauwertbildverarbeitung,

Figur 2 die Steuereinheit zur flexiblen Bildverarbeitung,

Figur 3 in einem Blockschaltbild die digitale Vorverarbeitung des Videobildes,

Figur 4 ein Anwendungsbeispiel zur Detektion eines Objektes mit beliebig orientierten Kanten,

Figur 5 die Programmierung des Steuerspeichers für das Anwendungsbeispiel nach Figur 4,

Figur 6 als Anwendungsbeispiel das Grauwertprojektionshistogramm für beliebig orientierte Koordinatensysteme,

Figur 7 die Erkennung beliebiger Objektstrukturen mit der elektronischen Einrichtung als weiteres Anwendungsbeispiel und

Figur 8 die Methode zur Lagebestimmung von zum Beispiel Kreisstrukturen in mehreren parallel verarbeiteten Meßfenstern.

In der Figur 1 ist mit 1 ein Bildwandler (bevorzugt eine CCD-Halbleiterkamera) bezeichnet, der das auf einer Bildmatrix wiedergegebene Bild in einzelne elektrische Ladungspakete umsetzt, die dann sehr schnell durch Ladungsübertragungstechniken in Form eines Videosignals 2 (serielle Bildpunkte, zum Beispiel Grauwertpixel) seriell Zeile für Zeile ausgelesen werden. Das analoge Videosignal 2 wird in einem Analog-Digital-Wandler 3 digitalisiert. Gleichzeitig wird in einer Synchronisationseinheit 4 neben den Videosynchronisationsimpulsen H, V, $V_R$, auch der Pixeltakt für den weiteren Verfahrensablauf gewonnen. Diese Einheit umfaßt eine Phase-Lock-Loop (PLL) Schaltung bestehend aus einem Phasendetektor, einem spannungsgesteuerten Oszillator und einem digitalen Frequenzteiler im Rückkopplungszweig. Mit diesem Pixeltakt wird eine Steuereinheit 5 versorgt, die parallel zu jedem digitalen Pixel aus dem Analog/Digital-Wandler 3 eine Steueradresse für die digitale Bildverarbeitung 6 liefert.

Die Steuereinheit 5 wird anhand der Figur 2 und die digitale Bildverarbeitung 6 anhand der Figur 3 beschrieben. Die im Rechenwerk der digitalen Bildverarbeitung vorverarbeitete Bildinformation wird zur weiteren Auswertung einem Bildprozessor 7, zum Beispiel einem Mikroprozessor 80188, zugeleitet. Die so gewonnenen Ergebnisse des Bildprozessors 7 werden über einen Kommunikationsprozessor 8, zum Beispiel 8031, in ein lokales Rechnernetz 9 eingeleitet. Über dieses Netz können die Ergebnisse der Bildverarbeitung von einer oder mehreren analog aufgebauten Auswerteeinheiten einem übergeordneten, in der Figur nicht dargestellten, Systemrechner zugeführt werden.

Die Figur 2 zeigt eine detaillierte Darstellung der Steuereinheit 5 aus der Figur 1. Das Kernstück ist ein Graphikprozessor 10, zum Beispiel ein µPD 7220 von NEC, der mit seinem Vektorgenerator eine schnelle Programmierung eines Steuerspeichers 11 durchführt. Der Steuerspeicher besteht zum Beispiel aus zwölf Speicherebenen a 512 x 512 Bit realisiert mit 64 k x 4 Bit RAM Speicher-Bausteinen. In diesem Steuerspeicher 11 wird die Information zur aufgabenspezifischen Abarbeitung des Videobildes vor dem eigentlichen Verarbeitungszyklus eingeschrieben. Vom Mikroprozessor 7 (Figur 1) wird über einen Adressbus mit zusätzlichen Steuerleitungen 12, einen Datenbus 14 und ein BUS-Interface 13 (Figur 2) der Vorgang der Programmierung initialisiert und die Randpunkte der Speicherinformation dem Grafikprozessor übergeben. Ein Steuerregister 15 wählt im Steuerspeicher 11 zum Beispiel die Bitebene 16 aus, die momentan vom Graphikprozssor zu programmieren ist. Für die Verarbeitung der Bildinformation im Rechenwerk der digitalen Bildverarbeitung 6 (Figur 1) wird über die Synchronisation 4 der Takt 17 an den Graphikprozessor 10 angelegt (Figur 2), der das Auslesen des Steuerspeichers 11 über die parallel-serielle Umsetzung 18 bewirkt und die Steuerinformation auf die Steueradressenleitungen 19 legt, die dann parallel zu den digitalen Pixeln aus dem Analog/ Digitalwandler 3 der digitalen Bildverarbeitung 6 zugeführt werden. Zu Testzwecken dient eine interne Takterzeugung 20.

Die Einheit der digitalen Bildverarbeitung besteht aus einem Rechenwerk 21 (Figur 3), zum Beispiel ALU-Bausteinen 74 LS 381 und einem RAM-Ergebnisspeicher 22, in dem die Ergebnisse der Bildoperation abgelegt werden. Dieser Speicher ist realisiert als 4 k x 16 Bit in AM 9150 Bausteinen. Der Ergebnisspeicher 22 (RAM) wird über die Adressen 19 der Steuereinheit 5 adressiert. Diese Leitungen führen in einen Adressmultiplexer 23, der die einzelnen Zellen des RAM-Speichers 22 für das Rechenwerk 21 so adressiert, daß entsprechend der gewünschten Verarbeitung der jeweilige Zelleninhalt des RAM-Speichers mit dem auf der Leitung 24 anliegenden momentanen Helligkeitswert des Videobildes im Rechenwerk 21 verknüpft und das Ergebnis wieder in der gleichen Zelle des RAM-Ergebnisspeichers 22 abgelegt wird. In einer Maximalwerterkennung 25 wird die höchste vorkommende Steueradresse 19 in einem Videovollbild erkannt und vom Adreßzähler 27 übernommen. Der vom DMA-Interface 26 angesteuerte Adreßzähler 27 adressiert nach der Verarbeitung, also in der vertikalen Austastlücke des Videosignals, über den Adreßmultiplexer 23 den RAM-Speicher 22, der seine Daten über eine digitale Amplitudenumsetzung 28 an das DMA-Interface 26 zur Weiterleitung an den Bildprozessor 7 (Figur 1) liefert.

Das Erkennungssystem nach der Erfindung ist für einen vielseitigen Einsatz im Produktionsbereich geeignet. Nachfolgende Beispiele verdeutlichen die Möglichkeiten der flexiblen Echtzeitverarbeitung zur Lösung von unterschiedlichen Aufgabenstellungen.

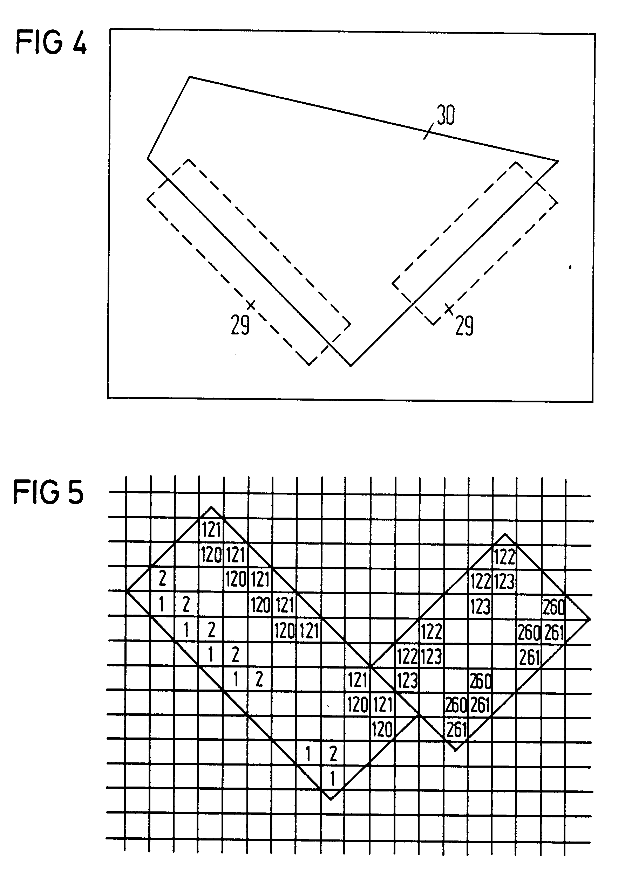

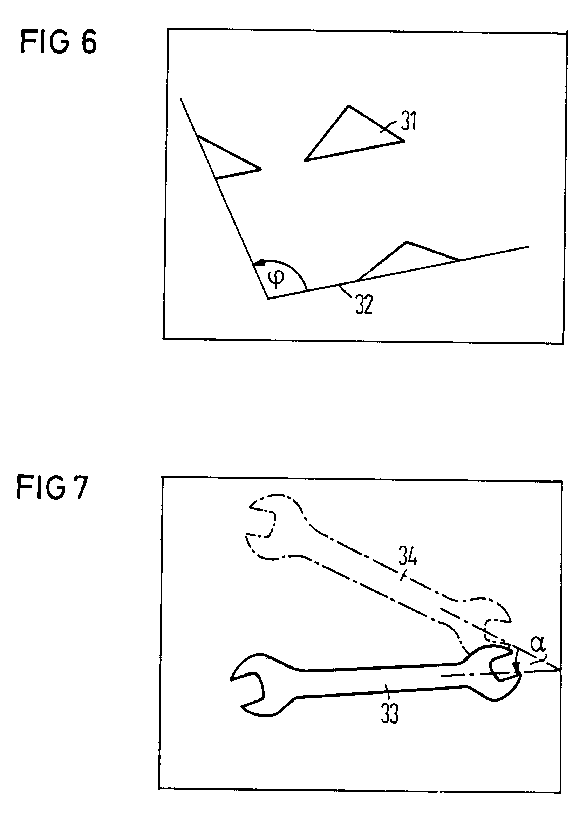

Die Form und Lage von Objekten ist in vielen Anwendungen durch die Bestimmung der Objektkanten festgelegt. Das Erkennungssystem kann hierzu den integralen Grauwertverlauf der Bildinformation innerhalb von Meßfenstern mit variabler Größe und Orientierung durch entsprechende Programmierung des Steuerspeichers erfassen. So soll nach der Figur 4 ein zu erkennendes Werkstück 30 innerhalb von zwei Meßfenstern 29 anhand der darin gefundenen Kanten in seiner Lage und Orientierung detektiert werden. Die elektronische Einrichtung führt dies mit der in der Figur 5 gezeichneten Programmierung des Steuerspeichers 11 aus.

Diese Methode eignet sich besonders für die Detektion von kontrastarmen Kanten in einer ge-störten Umgebung (Halbleiterstrukturen, Leiterbah-nen, Textzeichen). Die Objektstrukturen können hierbei eine beliebige Orientierung zu den Zeilen der Videokamera besitzen. Allgemein läßt sich mit diesem Verfahren die Projektion der digitalisierten Grauwerte auf nicht orthogonale Koordinatensysteme ausführen. Die Objekterkennung erfolgt dann durch Korrelation mit den wesentlichen Merkmalen dieses zweidimensionalen Projektionshistogramms.

Die Erkennung ist weiter nicht auf lineare Strukturen begrenzt. Beliebig komplexe Objektformen werden nach Programmierung ihrer Hüllkurve im Steuerspeicher aus der Gesamtheit des Bildes detektiert.

Figur 6 zeigt schematisch das Verfahren zur Bildung von Grauwert-Projektionshistogrammen an einem Objekt 31 auf ein beliebig orientiertes Koordinatensystem 32. Die genaue Lage und Orientierung des gesuchten Objektes ergibt sich dabei aus dem Maximum des Korrelationswertes im Ergeb-nisspeicher nach einem dynamischen Suchvor-gang. Ein Spezialfall stellt die Detektion von Kreisen, zum Beispiel Bohrungen in Leiterplatten, dar. Eine genaue laterale Erfassung der Kreisform ergibt sich aus radial angeordneten Meßfenstern, die jeweils die Tangente an die Kreisform ermitteln.

Die Figur 7 gibt für ein beliebig geformtes Werkstück 33 schematisch die Programmierung der Hüllkurve 34 im Steuerspeicher 11 wieder, die zur schnellen Detektion dieses Werkstückes im Bild verwendet werden kann. Diese Auswertung ist in Echtzeit durchführbar.

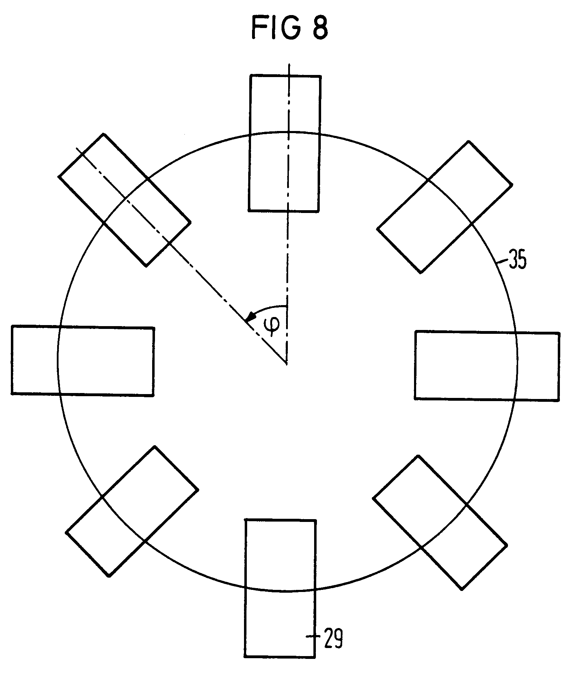

Die Figur 8 zeigt ein Verfahren zur Detektion eines Kegelschnittes (zum Beispiel eines Kreises) 35, dessen Form in mehreren parallel verarbeiteten Meßfenstern 29 radial über den Winkel $\phi$ gefunden wird.

Im folgenden wird der verfahrensmäßige Funktionsablauf der Hardware für ein Ausführungsbeispiel als optisches Erkennungssystem für das Positionieren einer Leiterplatte bei der automatischen Bestückung von Bauelementen beschrieben.

Vor dem automatischen Bestücken von Leiterplatten mit Bauelementen wird konventionell die Leiterplatte zum Bestückwerkzeug eines Automaten mechanisch über Zentrierbohrungen justiert. Hohe Anforderungen an die Präzision der Bauelementemontage machen künftig ein berührungsloses Justieren anhand des Leiterbildes unumgänglich. Dabei müssen beliebige Leiterbahnmuster für den Ju-stiervorgang vom Erkennungssystem erfaßt wer-den. Das können beispielsweise Quadrate, Kreuze, Kreise, Kreisringe, Rautenstrukturen und so weiter sein.

Die Leiterplatte wird im Bestückautomaten nur grob durch die mechanische Zuführung vorpositioniert, so daß die lagebestimmenden Kanten des Justiermusters, zum Beispiel ein regelloses Viereck nach Figur 4, in einem vorgegebenen Auswertebereich (29, Figur 4) erscheint. Wenn die Justierstruktur das Muster gemäß der Figur 4 besitzt, dann läßt sich seine Lage in den Auswertebereichen 29 durch vorangegangene Programmierung des Steuerspeichers 10 der Steuereinheit 5 (Figur 1) und Addition der in Figur 5 mit demselben Zellenwert in der digitalen Bildverarbeitungseinheit (6, Figur 1) aus dem dabei erhaltenen integralen Signalverlauf bestimmen. Dieser integrale Signalverlauf wird für die Erkennung der Kante des Justiermusters mit dem Bildprozessor (7, Figur 1) softwaremäßig derart ausgewertet, daß die Lage der Kanten durch übliche bekannte Verfahren der digitalen Bildverarbeitung (zum Beispiel nach Computer Vision, Dana H. Ballard und Christopher M. Brown, Verlag Prentice-Hall, 1982, Seiten 75 bis 81) bestimmt werden. Das Ergebnis wird dann über den Kommunikationsprozessor 8 auf das lokale Netzwerk 9 weitergeleitet, das mit dem Systemrechner des Bestückautomaten verbunden ist. Aus dieser übermit-telten Lageposition $\Delta$x, $\Delta$y läßt sich dann der Bestückkopf des Automaten präzise zur Leiterplatte einrichten oder umgekehrt.

Da bei der Justierung auch ein Rotationsfehler $\Delta\phi$ auftreten kann, ist es erforderlich, die Position der Leiterplatte anhand zweier voneinander mit bekanntem Abstand angeordneter Justiermuster festzulegen. Aus den darin enthaltenen Lageabweichungen $\Delta x_1$, $\Delta y_1$, $\Delta x_2$, $\Delta y_2$ läßt sich dann durch trigonometrische Verknüpfung der Lagefehler in $\Delta x$, $\Delta y$ und $\Delta\phi$ berechnen.

Diese Lösung setzt voraus, daß der Auswertebereich (Fenster) so groß gewählt ist, daß die Lage des Justiermusters bei der Vorpositionierung immer innerhalb dieses Meßfensters zu liegen kommt.

Für jedes andere Justiermuster kann durch die Umprogrammierung des Steuerspeichers (Figur 5) adaptiv zur gegebenen Musterform ein Erkennungsvorgang in der oben beschriebenen Weise durchgeführt werden.

Die Figur 8 zeigt das Setzen der Auswertebereiche 29 für die Erkennung einer Kreisstruktur 35 als Justiermuster.

Die in einem Arbeitsprozeß auftretenden Justiermuster sind dem Bildprozessor des Erkennungssystems als Wissensbasis bekannt und werden vor Ablauf des Arbeitsprozesses eingespeichert.

Nach dem Einschalten des Gerätes müssen vor der Durchführung eines Erkennungsvorganges aufgabenspezifisch und problemorientiert die Steuerinformationen zur Durchführung der digitalen Bildvorverarbeitung in den Steuerspeicher 11 der Steuereinheit 5 geladen werden. Dazu werden dem Vektorgenerator des Steuerprozessors 10 die Form (zum Beispiel Gerade, Kreissegment etc.) und der Anfang- und Endpunkt des Verarbeitungsweges angegeben. Dieser errechnet sich daraus sämtliche Zwischenpunkte und legt sie in den Steuerspeicher 16 als Steuerinformation ab. Es kann deshalb mit geringem Softwareaufwand die Steuereinheit 5 sehr schnell und mit komplexem Informationsgehalt programmiert werden. Zur nachfolgenden Bildverarbeitung muß das zu untersuchende Objekt (zum Beispiel Werkstück) innerhalb des Gesichtsfeldes der Kamera sein. Das von der Kamera ausgehende Videosignal 2 wird nach einer Analog/Digitalwandlung auf der Leitung 24 der arithmetischen Auswerteeinheit 21 der digitalen Bildverarbeitung zugeführt.

Zeitlich synchron wird die Steuerinformation aus dem Steuerspeicher 11 der Steuereinheit 5 ausgelesen. Nach der Parallel/Seriell-Wandlung 18 wird über den Adressmultiplexer 23 diese Information als Adresse für den Inhalt des Ergebnisspeichers 22 verwendet. Dieser Inhalt wird dann ebenfalls der arithmetischen Auswerteeinheit 21 zugeführt und mit dem individuellen digitalen Videowert logisch verknüpft. Das Ergebnis dieser logischen Verknüpfung wird wieder in den Ergebnisspeicher 22 unter derselben Adresse abgelegt. Dieser Vorgang wiederholt sich für sämtliche Bildpunkte, für die während des Durchlaufs eines Bildes eine Steuerinformation im Steuerspeicher einprogrammiert wurde.

Gleichzeitig hält die Maximalwerterkennung 25 die größte vorkommende Steueradresse fest und stellt diese am Ende des Videovollbildes dem Adresszähler 27 zur Verfügung.

Der nach dem Bilddurchlauf im Ergebnisspeicher 22 vorhandene, reduzierte Bildinhalt wird über das DMA-Interface 26 gesteuert aus dem Ergebnisspeicher 22 ausgelesen. Der Adreßzähler 27 wird dabei aus der Maximalwerterkennung 25 gesetzt und gibt somit die höchst vorkommende Adresse des Ergebnisspeichers 22 an. Beim Auslesen wird diese Adresse - gesteuert über das DMA-Interface - heruntergezählt.

Nach Durchlauf einer digitalen Amplitudenumsetzung 28 zur Grauwertmanipulation werden die Bilddaten in den Arbeitsspeicher des Mikroprozessorsystem 7 abgelegt. Die weitere softwaremäßige Auswertung der reduzierten Bilddaten erfolgt entsprechend der jeweiligen Erkennungsaufgabe in diesem Mikroprozessorsystem nach einem dort eingespeicherten Arbeitsprogramm. Ergebnisse des Erkennungsvorgangs, zum Beispiel Kantenlagen, Kreismittelpunkte usw. werden über den Kommunikationsprozessor 8 und das Rechnernetz 9 an einen übergeordneten Systemrechner (host) übergeben.

Soll bei der Bilderkennung der Auswertevorgang beschleunigt werden, so können mehrere modulare Auswerteeinheiten parallel eingesetzt werden. Dazu werden vor dem Erkennungsvorgang die verschiedenen Steuerspeicher dieser mehreren Erkennungseinheiten mit den entsprechenden unterschiedlichen Auswertebereichen (Meßfenster 29) programmiert. Die Ergebnisse können wiederum über das gemeinsame Rechnernetz 9 dem übergeordneten Systemrechner zugeführt werden.

Der übergeordnete Systemrechner veranlaßt anhand des Ergebnisses dieses visuellen Erkennungsvorganges verschiedene Regelungs-und Steuervorgänge im Produktionsablauf.

**Patentansprüche**

1. Einrichtung zur flexiblen Erkennung von Objektstrukturen mit einem optoelektronischen Bildwandler (1) für die zeilenförmige Bildabtastung, wobei ein Videosignal (2) des optoelektronischen Bildwandlers (1) über einen Analog-Digital-Wandler (3) einer digitalen Bildvorverarbeitung (6) mit einem Ergebnisspeicher (22) zuführbar ist, jeweils der momentane Helligkeitswert der Bildabtastung mit einem durch einen Verarbeitungsweg bestimmten, in dem Ergebnisspeicher (22) abgelegten, vorausgegangenen Verknüpfungsergebnis arithmetisch/logisch verarbeitet wird und die durch die Verknüpfung reduzierten Bilddaten zur Auffindung der gesuchten Strukturen in einem Bildprozessor (7) ausgewertet werden, wobei in der digitalen Bildvorverarbeitung (6) mit dem Ergebnisspeicher (22) der momentane Helligkeitswert der Bildabtastung mit Hilfe einer, aus einer Steuereinheit (5) zeitlich parallel anliegenden Steuerinformation, mit einem von der Steuerinformation bestimmten beliebigen Verknüpfungsergebnis, das vorher in dem Ergebnisspeicher (22) abgelegt wurde, arithmetisch/logisch verarbeitbar und das neue Ergebnis wiederum in diesem ablegbar ist, **gekennzeichnet durch** folgende Merkmale:

a) die aufgabenspezifische, schnelle Programmierung der Steuerinformation für jeden Bildpunkt der zeilenförmigen Bildabtastung ist innerhalb der Steuereinheit (5) universell durchführbar und in einem Steuerspeicher (11) ablegbar,

b) die Steuereinheit (5) umfaßt einen universellen Graphikprozessor (10), der als Vektorgenerator eingesetzt ist und so angepaßt ist, daß er selbsttätig eine aufgabenspezifische schnelle Programmierung des Steuerspeichers (11) entsprechend dem Verarbeitungsweg innerhalb der vertikalen Austastlücke des Videosignales (2) durchführt, wobei dem Graphikprozessor (10) vom Bildprozessor (7) nur die Anfangs- und Endpunkte und die Form des Verarbeitungsweges vorgegeben werden,

c) in einem Bildprozessor (7) sind die am Ende eines Bilddurchlaufes aus dem Ergebnisspeicher (22) ausgelesenen, reduzierten Bilddaten weiter aufgabenspezifisch auswertbar.

2. Einrichtung nach Anspruch 1, **dadurch gekennzeichnet,** daß eine arithmetisch/logische Verknüpfung des momentanen Helligkeitswertes der Bildabtastung mit dem Inhalt einer bestimmten Speicherzelle des Ergebnisspeichers (22) in der digitalen Bildvorverarbeitung (6) in einem Rechenwerk (21) durchgeführbar ist und das Ergebnis wieder in diese Speicherzelle ablegbar ist, wobei die Adressierung dieser Speicherzelle über die parallel anliegende Steuerinformation des Steuerspeichers (11) erfolgt.

3. Einrichtung nach Anspruch 1, **dadurch gekennzeichnet,** daß am Ende eines Bilddurchlaufes die im Ergebnisspeicher (22) vorhandenen reduzierten Bilddaten vorliegen und zur weiteren Auswertung zur Verfügung stehen.

4. Einrichtung nach Anspruch 3, **dadurch gekennzeichnet,** daß die reduzierten Bilddaten für die weitere Auswertung aus dem Ergebnisspeicher (22) nach einer digitalen Umsetzung (28) über ein DMA Interface (26) an einen geeigneten Bildprozessor (7) übergebbar sind.

5. Einrichtung nach Anspruch 1, **dadurch gekennzeichnet,** daß die elektronische Auswerteeinrichtung modular aufgebaut ist, so daß mehrere Systeme zur parallelen Verarbeitung eines Bildes einsetzbar sind und deren Ergebnisse über das Rechnernetz (9) einem übergeordneten Systemrechner zur weiteren Verarbeitung zuführbar sind.

6. Einrichtung nach Anspruch 1, **dadurch gekennzeichnet,** daß ein durch den Graphikprozessor (10) im Steuerspeicher (11) programmierter Verarbeitungsweg zur digitalen Bildauswertung an einem TV-Monitor zur einfachen, flexiblen Programmierung sichtbar gemacht werden kann.

**Claims**

1. Apparatus for flexible recognition of object structures having an opto-electronic image converter (1) for line-by-line image scanning, it being possible to supply a video signal (2) of the opto-electronic image converter (1) to a digital image pre-processor (6) with a result memory (22) via an analogue-to-digital converter (3), the momentary brightness value of the image scanning being processed arithmetically/logically in each case with a preceding logic result determined by a processing path and stored in the result memory (22), and the image data reduced by the logic operation being interpreted in an image processor (7) in order to locate the sought-for structures, it being possible in the digital image pre-processor (6) with the result memory (22) for the momentary brightness value of the image scanning to be arithmetically/logically processed with the aid of control information, concurrently supplied from a control unit (5), with an arbitrary logic result determined by the control information and previously stored in the result memory (22), and for the new result to be stored in turn therein, characterised by the following features:

a) the job-specific, fast programming of the control information for each pixel of the line-by-line image scanning can be performed universally inside the control unit (5) and can be stored in a control memory (7),

b) the control unit (5) comprises a universal graphics processor (10), which is used as a vector generator and is matched so that it automatically performs job-specific, fast programming of the control memory (11) in accordance with the processing path inside the vertical blanking interval of the video signal (2), the graphics processor (10) being prescribed by the image processor (7) only the start and end points and the form of the processing path,

c) the reduced image data read out from the result memory (22) at the end of an image pass can be interpreted further in a job-specific fashion in an image processor (7).

2. Apparatus according to Claim 1, characterised in that arithmetic/logic processing of the momentary brightness value of the image scanning with the contents of a specific memory location of the result memory (22) in the digital image pre-processor (6) can be performed in an arithmetic unit (21), and the result can be stored once again in this memory location, the addressing of this memory location being effected via the concurrently supplied control information of the control memory (11).

3. Apparatus according to Claim 1, characterised in that at the end of an image pass the reduced image data ready in the result memory (22) are present and available for further interpretation.

4. Apparatus according to Claim 3, characterised in that after digital conversion (28) the reduced image data can be transferred for further interpretation from the result memory (22) via a DMA interface (26) to a suitable image processor (7).

5. Apparatus according to Claim 1, characterised in that the electronic interpretation device is constructed in a modular fashion, so that a plurality of systems can be used for parallel processing of an image and the results thereof can be supplied for further processing to a higher-ranking system computer via the computer network (9).

6. Apparatus according to Claim 1, characterised in that for the purpose of simple, flexible programming a processing path programmed by the graphics processor (10) in the control memory (11) can be visualised on a TV monitor for digital image interpretation.

**Revendications**

1. Dispositif de reconnaissance souple de structures d'objets, comportant un convertisseur d'images optoélectronique (1) pour le balayage d'images ligne par ligne, et dans lequel un signal vidéo (2) du convertisseur d'images optoélectronique (1) peut être envoyé par l'intermédiaire d'un convertisseur analogique/numérique (3) à une unité numérique (6) de prétraitement d'images comportant une mémoire de résultats (22), respectivement la valeur instantanée de luminosité du balayage de l'image est traitée arithmétiquement/logiquement avec un résultat précédent de combinaison, déterminé par une voie de traitement et mémorisé dans la mémoire de résultats (22), et les données d'image, réduites par la combinaison, sont évaluées pour la détection des structures recherchées dans un processeur d'images (7), et dans lequel, dans l'unité numérique (6) de prétraitement d'images équipée de la mémoire de résultats (22), la valeur instantanée de luminosité du balayage de l'image peut être traitée arithmétiquement/logiquement à l'aide d'une information de commande appliquée en parallèle dans le temps à partir de l'unité de commande (5), avec un résultat de combinaison quelconque, déterminé par l'information de commande et qui a été mémorisé auparavant dans la mémoire de résultats (22), et le nouveau résultat peut à nouveau être mémorisé dans cette mémoire,

caractérisé par les dispositions suivantes :

a) la programmation rapide, qui est spécifique à la tâche, de l'information de commande pour chaque point d'image du balayage ligne par ligne de l'image peut être exécutée d'une manière universelle dans l'unité de commande (5) et peut être mémorisée dans une mémoire de commande (11),

b) l'unité de commande (5) comprend un processeur graphique universel (10), qui est utilisé en tant que générateur de vecteur et est adapté de manière à exécuter de façon automatique une programmation rapide, spécifique à la tâche, de la mémoire de commande (11) en fonction de la voie de traitement à l'intérieur de l'intervalle de suppression vertical du signal vidéo (2), seuls le point de départ et le point d'extrémité et la forme du trajet de traitement étant prédéterminés par le processeur d'images (7) pour le processeur graphique (10),

c) les données d'image réduites, lues à partir de la mémoire de résultats (22), à la fin d'un parcours de l'image peuvent en outre être évaluées, d'une manière spécifique à la tâche, dans un processeur d'images (7).

2. Dispositif suivant la revendication 1, caractérisé par le fait qu'une combinaison arithmétique/logique de la valeur instantanée de luminosité du balayage de l'image peut être exécutée avec le contenu d'une cellule déterminée de la mémoire de résultats (22) dans l'unité numérique (6) de traitement de l'image dans une unité de calcul (21), et le résultat peut à nouveau être mémorisé dans cette cellule de mémoire, l'adressage de cette cellule de mémoire étant réalisé par l'intermédiaire de l'information de commande, appliquée en parallèle, de la mémoire de commande (11).

3. Dispositif suivant la revendication 1, caractérisé par le fait qu'à la fin d'un parcours de l'image, les données d'image réduites situées dans la mémoire de résultats (22) sont présentes et disponibles pour une évaluation ultérieure.

4. Dispositif suivant la revendication 3, caractérisé par le fait que les données d'images réduites peuvent être transférées, pour une évaluation ultérieure, depuis la mémoire de résultats (22) à un processeur d'images approprié (7) après une conversion numérique (28) par l'intermédiaire d'une interface DMA (26).

5. Dispositif suivant la revendication 1, caractérisé par le fait que le dispositif d'évaluation électronique possède un agencement modulaire, de sorte que l'on peut utiliser plusieurs systèmes pour le traitement en parallèle d'une image et que les résultats de ce traitement peuvent être envoyés par l'intermédiaire du réseau (9) de l'ordinateur, à un calculateur du système, de rang supérieur, pour une évaluation supérieure.

6. Dispositif suivant la revendication 1, caractérisé par le fait qu'une voie de traitement programmée par le processeur graphique (10) dans la mémoire de commande (11) peut être visualisée pour réaliser l'évaluation numérique de l'image sur un moniteur de télévision, afin d'avoir une programmation simple et souple.

# FIG 1

# FIG 2

# FIG 3

FIG 4

FIG 5

FIG 6

FIG 7

# FIG 8